# EUROPEAN PATENT APPLICATION

(11) **EP 0 662 496 A2**
(43) Date of publication of application: **12.07.1995**
(21) Application number: 94120661.7
(22) Date of filing: 24.12.1994
(51) Int. Cl.: C08L 23/02, C08G 81/02

(54) **Additives for paintable and printable polyolefin compositions**

(30) Priority: 06.01.1994 US 178192
(71) Applicant: Th. Goldschmidt AG, D-45127 Essen (DE)
(72) Inventor: Koerner, Götz, Dr., D-45259 Essen (DE); Spiegler, Roland, Dr., D-45470 Mülheim (DE); Yilgör, Iskender, Dr., Midlothian, VA 23112 (US)

(57) **Abstract**

A paintable or printable polymer composition is prepared consisting of a polyolefin or polyolefin/rubber blend and at least one additive. The additive being a copolymer of the structure:

[(A)_{L}- (X) (B)_{M} (Y)]_{N}

where (A)_{L} is a polyolefin or polyester moiety and (B)_{M} is a hydrophilic moiety. Additive provides improved paintability or printability to the polyolefin composition when used in amounts of 0.1 to 10% by weight compared to the base resin.

## Description

### FIELD OF INVENTION

The invention relates to the preparation and use of hydrophilic additives consisting of a polyolefin moiety chemically linked to polar (e.g., hydrophilic) moieties, and Polyolefin and polyolefin/rubber compositions containing at least one such additive, the said compositions with the additive being paintable or printable without the need for primers or surface treatment.

### BACKGROUND INFORMATION AND PRIOR ART

The use of polymers/plastics in various commodity and specialty applications has been steadily increasing over the last several decades. Their application have almost become a necessity in the transportation, especially automotive, industry, since they are strong but lightweight, thus making cars durable and more efficient. As a consequence, problems related to the paintability and printability of such polymeric surfaces have become very important.

Painting of a surface can be desired for decorative purposes and/or to provide protection against aggressive media, effects of the weather and/or wear. A layer of paint should exhibit a smooth surface and excellent adhesion to the underlying material as well as sufficient mechanical properties.

Depending on the application (for example, for a car's body or chassis), additional properties such as resistance of the paint against salt water, acid rain, gasoline or other fluids, UV radiation and impacts of small objects (insects, stones, etc.) may also be required.

Printing of a surface can also be used for decorative purposes or to provide information. Depending on the type of application (durable or disposable goods), the acceptable quality of the print, adhesion and durability can strongly differ.

Since polyolefins are usually nonpolar, they have low surface energy. Therefore, wetting and adhesion of usually polar paints and inks onto polyolefin surfaces create major problems. While wettability can easily be achieved by the addition of surfactants to the paint or ink formulation, for permanent adhesion strong bonds between the substrate surface and the coating are necessary. This requires a modified polymer surface, which would provide strong adhesion/bonding between the coating and the substrate, through the formation of chemical linkages or dipolar or ionic interactions, or entanglements between polymer chains.

In many industrial applications including automotive, the plastics are usually surface-treated prior to printing or painting, mainly through the use of physicochemical processes such as corona, UV radiation, flame or arc. During these treatments, the surface of the polymer is oxidized uncontrollably to build up surface functionality. Another possibility is chemical functionalization including etching with chlorine, sulphur dioxide, acids or solvents, or surface grafting.

Coating or laminating of a polyolefin film with a more polar homopolymer or copolymer is an alternative to surface treatment. Polyacrylates, polyvinyl alcohol, chlorinated or maleated polyolefins, or copolymers of polyethylene and polyvinyl alcohol, are examples for coating materials.

A disadvantage of the above-mentioned methods is the involvement of at least one additional processing step and the use of aggressive chemicals and/or processes. A more cost-effective method is blending the polyolefin with a hydrophilic or amphiphilic additive, which has a reduced solubility in the bulk polymer and segregates, to the surface during processing, thus increasing the surface energy without influencing bulk properties of the base resin. No additional equipment is needed for the blending/compounding of these additives with base resins, since they can be processed using typical extruders, rolls or other molding equipment.

Since almost every commodity polymer is a compound of the base resin with a variety of additives such as antioxidants, UV and thermal stabilizers, lubricants and processing aids, the hydrophilic or amphiphilic additive can be introduced during the standard processing. Therefore, no additional processing step is needed.

The additives which are presently used do not fulfill all the requirements necessary for good paintability or printability and as a result do not perform well. Usually, they are not properly attached to the polymer surface after segregation and, therefore, are unable to improve the adhesion of the coating. An example is described in the *JP Patent 51,102,071,* where 3 weight % of poly(oxyethylene) monostearate is added to isotactic polypropylene films. The additive segregates to the surface during annealing at 144°C for 30 seconds, but it is not permanent because it cannot physically or chemically interact with the base polypropylene resin. For permanency and improved paintability, it has to be attached to the surface by corona discharge.

The present invention is directed to the preparation and use of amphiphilic additives, which allow the preparation of polyolefin compositions, with permanently improved adhesion to paints, inks and lacquers without the need for primers or additional processing steps.

### OBJECT OF THE INVENTION

An object of the present invention is a paintable or printable polymer composition, consisting of a polyolefin or polyolefin/rubber blend, and at least one additive, with the distinguishing feature that the additive, blended with the base polymer for the purpose of providing permanently paintable or printable surfaces, is a copolymer having a structure [(A)_{L}-(X) (B)_{M}(Y)]_{N}, wherein:
- A: is a building unit of a polyolefin or polyester with the premise that (A) is a respective repeat unit or a derivative thereof and (L) is a degree of polymerization,
- B: is a repeat unit of a polyether,
- X: is a group which can be introduced onto the polymeric segment (A)_{L} and where (B)_{M}Y can be grafted to or grown onto,
- Y: is an amine, hydroxy or alkoxy end group of the polyether (B)_{M}, and
- L, M and N: are respective repeat units and are not less than 1.

In typical paintable/printable polyolefin compositions, the additive is present at an amount of 0.1 to 10% by weight, depending on the base polymer, processing and/or processing method used and the application of the finished product.

### SUMMARY OF THE INVENTION

The invented paintable or printable compositions use a copolymer/terpolymer additive as a surface modifier. The additive consists of a polyolefin or polyester moiety (A)_{L} with one or more polar segments X(B)_{M}Y. While the moiety (A)_{L} is compatible, or preferably miscible or cocrystallizable with the base polymer of the composition, the polar segments strongly reduce the miscibility with the base polymer. Typical additives, as shown in the examples, have maximum molecular solubilities in the base polymer of much less than 1% by weight, but are easily dispersible. Therefore, after the blending process which generates the composition, there is a demixing tendency of the additive. Partial demixing occurs either during subsequent processing steps as, for example, injection or compression molding or during annealing of the product. In either case, the newly-generated surface is uniformly covered with a thin layer of segregated additive.

The presence of the additive layer, which results in an increased surface polarity, can be demonstrated by a reduced contact angle of water on the surface. Wetting of paints, lacquers and inks is enhanced by the surface polarity. After drying of the coating, the additive provides a strongly increased adhesion between coating and substrate. The polyolefinic moiety provides a linkage to the substrate by entangling with polymer molecules, and the polar segments bond to the coating by dipolar interactions or by chemical linkage with the reactive end group Y.

The additive with the chemical composition of [(A)_{L}-(X) (B)_{M}(Y)]_{N} can have a block-like structure, consisting of two blocks (A)_{L} and (X) (B)_{M}(Y), or three blocks with (A)_{L} as middle block, or a comb-like structure in which one or more segments of (X) (B)_{M}(Y) are grafted onto the backbone of (A)_{L}.

The moiety (A)_{L} can be a derivative of polyethylene, polypropylene, polyester, or a hydrogenated polybutadiene, with (A) as respective repeat unit or a derivative thereof and (L) as degree of polymerization. (X) is a group which can be introduced in the polymeric segment (A)_{L} by copolymerization or functionalization, and where (B)_{M} Y can be grafted to or grown onto. (B)_{M} is a polar segment with (B) as repeat unit and (M) as degree of polymerization. (Y) is a reactive or unreactive end group.

Base resins to be used with the additives can be polyolefins, polyolefin-based copolymers, their blends and/or polyolefin/rubber blends. Particularly preferred are compositions with polyethylene, polypropylene, copolymers of polyethylene and polypropylene, or polypropylene/EPDM (Ethylene Propylene Copolymer) as base resins and additives, with the chemical composition of [(A)_{L}- (X) (B)_{M} (Y)]_{N}, where:
- A: is a building unit of a polyolefin or polyester with the premise that (A)_{L} is preferably miscible or cocrystallizable with the base polymer,
- B: is a repeat unit of a polyether with the premise that (B)_{M} is a poly(oxyethylene), poly(oxypropylene) group or a copolymer thereof,
- X: is a group which was introduced by radical reaction of the polymeric unit (A)_{L} with an unsaturated acid, ester or anhydride and where (B)_{M}Y is grafted to or grown onto,
- Y: is an amino, hydroxy or alkoxy end group of the polyether (B)_{M},
- L: has a value of 10 to 10,000,
- M: has a value of 1 to 1,000, and
- N: has a value of 1 to 100.

Examples of molecules which can be reacted radically with the polymeric unit (A)_{L} and where the polyether (B)_{M}Y is grafted to or grown onto, are maleic anhydride (1), *endo*-bicyclo[2.2.2]oct-5-ene-2,3-dicarboxylic anhydride (2), *cis*-5-Norbornene-*endo*-2,3-dicarboxylic anhydride (3), *cis*-5-Norbornene-*endo*-2,3-dicarboxylic acid (4), acrylic acid (5), etc., which are shown below. 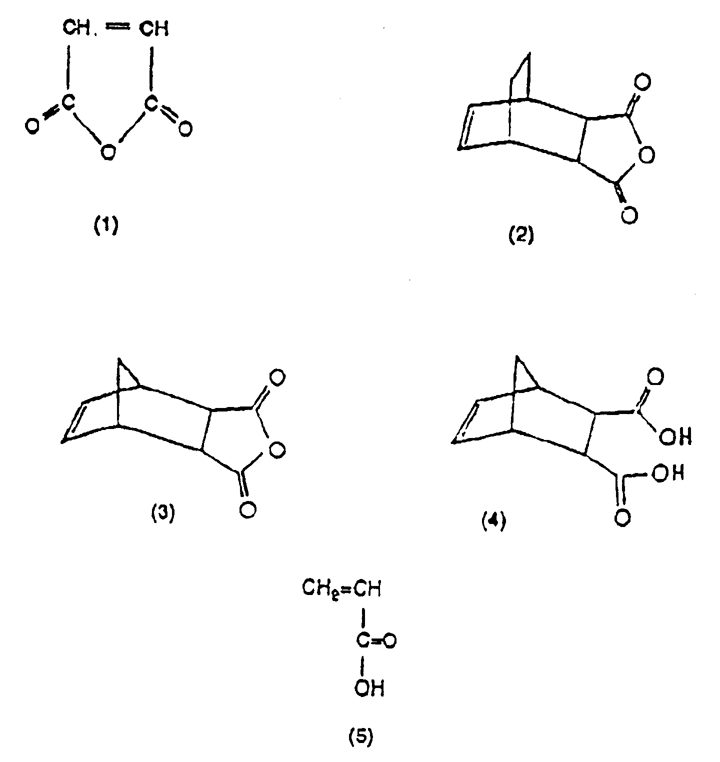
The anhydride or carboxylic containing monomer can either be copolymerized with the olefinic monomer, or it can be grafted onto the preformed polyolefin backbone, through free-radical grafting. The additive can be prepared, by the reaction of carboxylic acid or anhydride groups on the polyolefin, with the hydroxy or amine functional polyether oligomers through the formation of ester, amide or imide linkages. In the case of ester or amide formation, usually only one acid functionality of a dicarboxylic acid or an anhydride reacts completely, even if an excess of amine or hydroxy functionality is present. Resulting products, therefore, contain unreacted acid functionality.

When maleic anhydride is grafted onto a polyethylene backbone and only one carboxylic group is reacted with an amino-functional polyether, the resulting bridging group X, where polyether (B)_{M} is attached can be shown as (6): 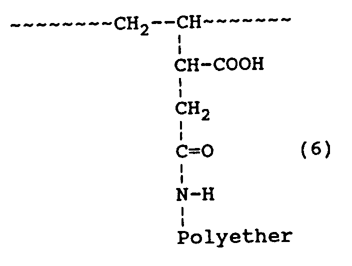
Preferred additives can be prepared in four steps:
1.) Polypropylene wax or polyethylene wax with the desired molecular weight is prepared by radical initiated degradation or thermal degradation of polypropylene or poly-ethylene, respectively. This process is well described in the literature. The waxes are also commercially available (e.g., from Kodak or Witco). Ethylene can also be copolymerized with acrylic acid (e.g., Surlyn from DuPont).
2.) Maleic anhydride (or another unsaturated anhydride, acid or ester) is grafted by a radical process onto polypropylene or polyethylene wax. The proper reaction conditions and radical initiators are well described in the literature. Polypropylene and polyethylene waxes grafted with maleic anhydride are also commercially available (e.g., from Kodak).
3.) Mono- or difunctional polyethers can be prepared by polymerization of ethylene oxide or propylene oxide. Reaction conditions and initiators are well described in the literature. Polyethylene glycols, α-hydroxy-ω-methoxy-(polyoxyethylene) or α-amino-ω-methoxy-(polyoxyethylene) or derivatives thereof, are commercially available (e.g., Jeffamines from Texaco or Carbowaxes from Union Carbide).
4.) There are three ways to react the functionalized polyolefin wax from step 1 or 2 with the functional polyether from step 3:
   a) They can be reacted in bulk in a stirred vessel at a temperature above the melting point of the wax. Usually, no catalyst is necessary for the reaction. Reaction times range between several minutes to several hours depending on the structure of the reactive groups.
   b) They can be reacted in solution in a suitable solvent such as toluene or xylene. For the formation of an amide linkage, usually no catalyst is necessary. For esterification, catalysts such as sulfuric acid or toluenesulfonic acid is necessary. Reaction times in solution may range between several hours and one day. The product is precipitated in acetone or a methanol/ethanol mixture to remove the unreacted polyether.
   c) They can be reacted *in situ* during the preparation of the polymer composition in an extruder or melt mixer.

The inventive compositions are prepared by blending the copolymeric additives or their precursors, which form the copolymer *in situ,* with the base polymer resin, in an extruder, a roll or melt mixer. The amount of copolymer additive is 0.1 to 10% by weight, based on the composition.

Products manufactured from the inventive compositions by, for example, injection or compression moulding or melt blowing or casting (in case of films), can be painted or printed directly or after annealing. Annealing may be necessary especially when the processing of the product is very fast, so that the additive may not have enough time to segregate to the surface. Proper annealing conditions will depend on the type of resin, amount of the additive, manufacturing temperature, residence time and blending process used for preparation of the composition and may have to be determined for each application.

As a guideline, the additive segregation will depend on the annealing time, temperature and the molecular weights of the base resin and the additive similar to a diffusion process. A higher annealing temperature and a lower molecular weight of the resin or additive will reduce the necessary annealing time.

Examples of inventive additives are: 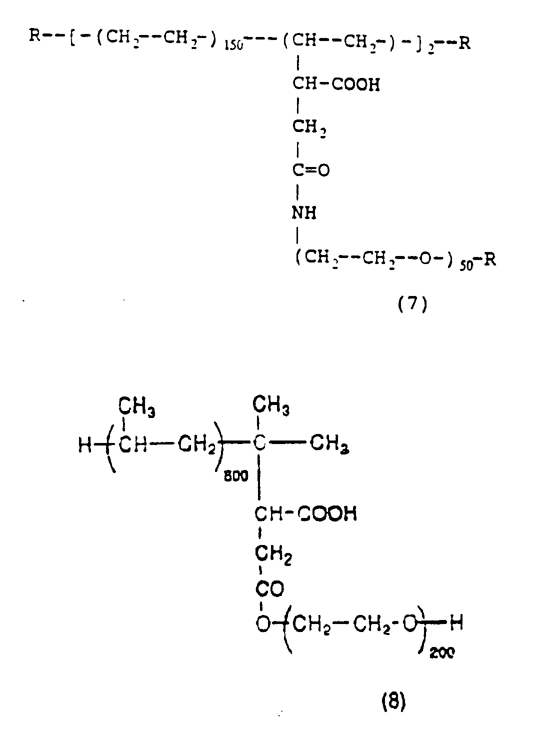
wherein
- (R¹): is a hydrogen atom or an alkyl residue,
- (R): is a hydrogen atom, an alkyl residue or an alkylamine,
- (m): is a number greater than 100,
- (n): is a number greater than 1, and
- (p): is a number greater than 1.

The following examples are provided by way of illustration and not by way of limitation.

### EXAMPLE 1

### Preparation of the Additives Polypropylene Copolymers

### Additive 1

Epolene E43 is a maleic anhydride modified polypropylene wax with acid number 47 and molecular weight M_{W} = 9,100 g/mole, M_{N}=3,900 g/mole (from Eastman Kodak). 70 grams of Epolene E43 was melted under nitrogen in a 500 ml beaker and stirred at 300 rpm with an RW 20 motor, from Ika Works, equipped with a standard 4-blade stirrer. Then, 30 grams of a methoxy-capped poly(ethylene oxide)glycol with a molecular weight of 750 g/mole, from Union Carbide, was added into the reactor.

After the mixture was completely molten, it was stirred at 1000 rpm for 30 minutes at a temperature of 180 to 190°C, then the product was poured on a metal pan and cooled down. FT-IR analysis of the product showed a strong ester peak, while the anhydride peak almost completely disappeared.

### Additive 2

24.4 grams of Epolene E43 was dissolved in 150 ml of boiling toluene in a 250 ml, three-neck flask fitted with a Dean&Stark receiver and a reflux condensor. Then, 10 grams of a methoxy-capped poly(ethylene oxide)glycol with a molecular weight of 5,000 g/mole (Union Carbide) and 0.8 grams of sulfuric acid were added.

Then, during a period of two hours, 10 grams of a methoxy-capped poly(ethylene oxide)glycol with a molecular weight of 2,000 g/mole (Union Carbide), and 6 grams of a methoxy-capped poly(ethylene oxide)glycol with a molecular weight of 750 g/mole (Union Carbide), were added. After a total reaction time of six hours during which the solution refluxed permanently, the product was precipitated in a methanol/ethanol (9:91 part by weight) mixture and filtered. FT-IR analysis of the product showed a strong ester peak.

### Additive 3

Using the procedure described for additive (1), 73.2 grams of Epolene E43 was reacted with 30 grams of a methoxy-capped poly(ethylene oxide)glycol with a molecular weight of 5,000 g/mole, 30 grams of a methoxy-capped poly(ethylene oxide)glycol with a molecular weight of 2,000 g/mole, and 18 grams of a methoxy-capped poly(ethylene oxide)glycol with a molecular weight of 750 g/mole. The methoxy-capped poly(ethylene oxide)glycols were added in intervals of 10 minutes in the order of appearance. Total reaction time was 30 minutes.

### Additive 4

Using the procedure described for additive (1), 98 grams of Epolene E43 was reacted with 40 grams of α-amino ω-methoxy poly(ethylene oxide)glycol with an average molecular weight of 1,000 g/mole (Jeffamine M1000 from Texaco).

### Additive 5

Using the procedure described for additive (1), 15 grams of Epolene E43 was reacted with 100 grams of a poly(ethylene oxide)glycol with a molecular weight of 1,450 g/mole (Union Carbide). To eliminate the large excess of unreacted poly(ethylene oxide)glycol, the product was heated for 10 minutes in one liter of water, and filtered.

### Polyethylene copolymers

### Additive 6

Epolene C18 is a maleic anhydride modified polyethylene wax with an acid number of 5 and a molecular weight M_{W} = 15,000 g/mole and M_{N}= 5,700 g/mole (from Eastman Kodak). Using the procedure described for additive (1), 150 grams of Epolene C18 was reacted with 14 grams of a methoxy-capped poly(ethylene oxide)glycol with a molecular weight of 2,000 g/mole.

### Additive 7

Epolene C16 is a maleic anhydride modified polyethylene wax with an acid number of 5 and a molecular weight M_{W} = 26,000 g/mole, M_{N}= 5,600 g/mole (from Eastman Kodak). Using the procedure described for additive (1), 150 grams of Epolene C16 was reacted with 14 grams of a methoxy-capped poly(ethylene oxide)glycol with a molecular weight of 2,000 g/mole.

### Additive 8

Using the procedure described for additive (1), 80 grams of Epolene C 16 was reacted with 80 grams of a poly(ethylene oxide)glycol with an average molecular weight of 20,000 g/mole (Union Carbide).

### EXAMPLE 2

### Preparation of the Compositions

60 grams of dry polypropylene/EPDM, SP 179/A/ 94 (from Himont) was melted in a Rheomix 600 laboratory mixer with counter-rotating screws (Haake) at 190°C. Then, 1.2 gram of dried copolymer additive (2% by weight) was added and the blend was kneaded at 100 rpm for three minutes.

### Preparation of Test Samples

Round plates with a diameter of 2" and a thickness of 1/16'' were prepared by compression moulding using a laboratory hydraulic press (type 2629; Carver Inc.). The process parameters were 200°C, 10 min, 2000 psi. The samples were pressed between stainless steel shim plates.

### Testing of Paintability

The test plates were painted with a spray paint, T 190 Red C from Dupli-Color, and dried at room temperature for three days. The dried paint layers were about 40 µm thick. Adhesion of the paint was tested according to DIN 53,151; the painted surface was cut with a razor blade in a rectangular pattern with a line spacing of 1/8'' , then an adhesive tape (SBR 4154 from Beiersdorf, Germany) was pressed to the surface with a hand roller (HR-100 4.5 from Chemsultants International). The adhesive tape was then removed. Application of adhesive tape was repeated four more times, each time rotating the alignment of the tape for 36 degrees. As a measure for the adhesion of the paint, the area percentage of paint remaining on the sample surface after the complete test was recorded.

Two additional tests were performed in order to check the resistance of the adhesive interlayer against hydrolysis and influences of surfactants and rust.

### Test A

Painted test plates were cut with a razor blade as described above and then immersed in water containing 0.2% by weight of a dishwashing liquid (Dawn from Procter & Gamble). A rusty steel plate was placed on top of the test samples. After one week, the samples were dried and the adhesion of the paint was tested as described above. The result of the test was rated as positive (+) if 100% of the paint was still adhering, otherwise it was rated negative (-).

### Test B

Painted test plates were cut with a razor blade as described above and then immersed in water with a temperature between 90 and 95°C. After two hours, the samples were dried and the adhesion of the paint was tested as described above. The result of the test was rated as positive (+) if 100% of the paint was still adhering, otherwise it was rated negative (-).

**Table 1**

| Paintability of PP/EPDM Samples | | | |
|---|---|---|---|
| Additive (2 wt.%) | Adhering paint (%) | Test (A) | Test (B) |
| none | 0 | - | - |
| Epolene E43 | 60 | - | - |
| Epolene C16 | 0 | - | - |
| M-PEG 2000 | 0 | - | - |
| Additive 2 | 100 | + | + |
| Additive 3 | 100 | + | + |
| Additive 4 | 100 | + | + |
| Additive 5 | 100 | + | + |

### TEST RESULTS

From Table 1, it is clear that PP/EPDM samples without the additive, or modified only with the precursors used for the synthesis of the additives (Epolene E43: maleic anhydride grafted polypropylene wax, Epolene C16: maleic anhydride grafted polyethylene wax, M-PEG 2000: methoxy-capped poly(ethylene oxide)glycol with molecular weight of 2,000 g/mole) do not provide the necessary adhesion to the paint.

Polypropylene copolymers (additives 2, 3, 4 and 5) give excellent results, while polyethylene copolymers (additives 6, 7 and 8) show no improvement.

### EXAMPLE 3

### Preparation of the Compositions

Compositions were prepared according to following methods:

### Method 1

56 grams of dry low density polyethylene, extrusion grade 640 from Dow Chemicals, was melted in a Rheomix 600 laboratory mixer with counter-rotating screws (Haake) at 150°C. Then 1.12 gram of dried copolymer additive (2 % by weight) was added. The resulting blend was kneaded at 100 rpm for three minutes.

### Method 2

Dry, low density polyethylene, extrusion grade 640 from Dow Chemicals, was premixed with dried copolymer additive (2% by weight) and extruded using a co-rotating twin screw extruder ZSK-30 (Werner & Pfleiderer), equipped with a T-20 loss-in-weight feeding system (K-Tron) and a Bronco II Model 160 pelletizer (Killion). Extrusion temperature was 175°C and residence time was between two and four minutes (250 rpm) .

### Preparation of Test Samples

Round plates with a diameter of 2" and a thickness of 1/16'' were prepared by compression moulding using a laboratory hydraulic press (type 2629; Carver Inc.). The process parameters were 180°C, 10 minutes, 2000 psi. The samples were pressed between stainless steel shim plates.

### Testing of Paintability

Samples were tested as described in Example 2.

### RESULTS

**Table 2**

| Paintability of LDPE (Low Density Polyethylene) Samples | | | | |
|---|---|---|---|---|
| Additive (2 wt%) | Preparation Method | Adhering paint (%) | Test (A) | Test (B) |
| none | | 0 | - | - |
| Epolene E43 | Method (1) | 80 | - | - |
| Epolene C16 | Method (1) | 60 | - | - |
| M-PEG 2000 | Method (1) | 0 | - | - |
| Additive 1 | Method (1) | 100 | + | + |
| Additive 2 | Method (1) | 100 | + | + |
| Additive 3 | Method (1) | 100 | + | + |
| Additive 3 | Method (2) | 100 | + | + |
| Additive 5 | Method (1) | 100 | + | + |
| Additive 7 | Method (1) | 100 | + | + |

As can be seen in Table 2, LDPE samples without an additive, or modified only with the precursors used for the synthesis of the additives (Epolene E43: maleic anhydride grafted polypropylene wax, Epolene C16: maleic anhydride grafted polyethylene wax, M-PEG 2000: methoxy capped poly(ethylene oxide)glycol with molecular weight of 2,000 g/mole) do not provide the necessary adhesion to the paint. Among all of the additives tested, polypropylene copolymers (additives 1, 2, 3 and 5) and one polyethylene copolymer (additive 7) gave excellent results.

## Claims

1. A paintable or printable polymer composition comprising a polyolefin or polyolefin and rubber blend and at least one additive, which comprises a polymer with the general formula (9)
[(A)_{L}-(X) (B)_{M} (Y)]_{N} (9)
wherein:
A is a repeat unit with the premise that (A)_{L} is an ethylene, propylene, caprolactone or hydrogenated butadiene group;
B is a repeat unit of a polyether with the premise that (B)_{M} is an oxyethylene, oxypropylene group or a copolymer thereof;
X is a group which is introduced by radical reaction of the polymeric unit (A)_{L} with an unsaturated acid, ester or anhydride and where (B)_{M}Y is grown onto or X acts as a polymerization initiator for B;
Y is -OH, -OR, -NH₂, -NHR or -NR₂, where R is an alkyl or acyl group with 1 to 18 carbon atoms;
L has a value of ≧ 5;
M has a value of ≧ 5; and
N has a value of ≧ 2.

2. The polymer composition of claim 1, further comprising that, as the additive, a copolymer with the formula (10) is used:
R¹ -[(CH₂CHR¹)_{L} - (CH₂CR¹R²)_{N}]_{X} - R¹ (10)
wherein:
R¹ is -H or -CH₃;
R² is -CH(CH₂-COOR³)(COOR³) or -CH(CH₂-COOR³)(CONHR³)
or 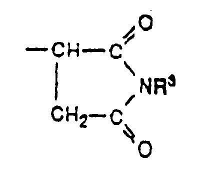
R³ is -H or -(C₂H₃(R¹)-O)_{M} -R¹ or -(C₂H₃(R¹)-O)_{M}-C₂H₃(R¹)NH₂,
and
M has a value of 10 to 200,
L has a value of 50 to 2000,
N has a value of 1 to 100; and
X has a value of 1 to 100.

3. The polymer composition of Claim 2, wherein the polyolefin or polyolefin and rubber blend comprises polyethylene, polypropylene, copolymers thereof or blends thereof with ethylene propylene copolymer.
